Europäisches Patentamt

European Patent Office

Office européen des brevets

(11) Veröffentlichungsnummer: **0 361 326**
**A2**

# (12) EUROPÄISCHE PATENTANMELDUNG

(21) Anmeldenummer: 89117544.0

(22) Anmeldetag: 22.09.89

(51) Int. Cl.⁵: **C04B 35/56**

(30) Priorität: 28.09.88 DE 3832876

(43) Veröffentlichungstag der Anmeldung:
04.04.90 Patentblatt 90/14

(84) Benannte Vertragsstaaten:
**DE FR GB IT NL SE**

(71) Anmelder: **Hoechst CeramTec**
**Aktiengesellschaft**
**Wilhelmstrasse 14**
**D-8672 Selb(DE)**

(72) Erfinder: **Benker, Werner**
**Ahornweg 28**
**D-8672 Selb(DE)**
Erfinder: **Lindemann, Gert**
**Am Pfaffenberg 40**
**D-8671 Schönwald(DE)**
Erfinder: **Heinrich, Jürgen, Dr.**
**Danziger Strasse 2**
**D-8672 Selb(DE)**

(74) Vertreter: **Isenbruck, Günter, Dr. et al**
**HOECHST AKTIENGESELLSCHAFT Zentrale**
**Patentabteilung Postfach 80 03 20**
**D-6230 Frankfurt/Main 80(DE)**

(54) **Bauteile aus Silizium-infiltriertem Siliziumcarbid mit poröser Oberfläche und Verfahren zu ihrer Herstellung.**

(57) Zur Herstellung eines Bauteils aus Silizium-infiltriertem Siliziumcarbid mit einer porösen Gleitfläche wird ein Bauteil aus Silizium-infiltriertem Siliziumcarbid (Zusammensetzung: 40 - 95 Gew.-% SiC, 1 - 45 Gew.-% Kohlenstoff-Partikel der Korngröße 0,1 bis 500 $\mu$m und 1 - 25 Gew.-% Silizium) an Teilen der Oberfläche spanabhebend bearbeitet und so eine Gleitfläche erzeugt. Das erhaltene Bauteil wird in einer Sauerstoff enthaltenden Atmosphäre bei Temperaturen von 700 bis 1410 C solange erhitzt, bis die in der Gleitfläche vorhandenen Kohlenstoff-Partikel mindestens teilweise unter Porenbildung oxidiert sind.

EP 0 361 326 A2

## Bauteile aus Silizium-infiltriertem Siliziumcarbid mit poröser Oberfläche und Verfahren zu ihrer Herstellung

Die Erfindung betrifft Bauteile aus Silizium-infiltriertem Siliziumcarbid, das zusätzlich noch feinverteilte Kohlenstoff-Partikel enthält. Silizium-infiltriertes Siliziumcarbid ohne Kohlenstoff kann u.a. verwendet werden zur Herstellung von Kolbenringen und Kolbenhemden für Kolben von Verbrennungsmotoren. Dabei ist die große Härte und das gute Wärmeleitvermögen von Siliziumcarbid vorteilhaft. Gemäß europäischer Patentanmeldung 092716 lassen sich auch Gleitringe und Gleitkörper aus Silizium-infiltriertem Siliziumcarbid herstellen.

Es sind ferner Gleitmaterialien bekannt, die gleichzeitig Siliziumcarbid und größere Mengen Graphit enthalten.

Nach dem Verfahren der DE-PS 28 34 315 wird ein Kohlenstoff-Halbzeug bei mindestens 2100°C mit schmelzflüssigem Silizium imprägniert. Dabei werden zunächst die Poren mit Silizium ausgefüllt, das anschließend in Siliziumcarbid überführt wird. Der erhaltene Werkstoff soll eine dichte Graphit-Karbid-Struktur mit einer gleichmäßigen Phasenverteilung aufweisen und sich gut zur Herstellung von Gleitkörpern eignen. Über die Korngröße der vorhandenen Kohlenstoff-Partikel und die Mengen des freien Siliziums finden sich in dieser Literaturstelle keine Angaben.

Analog läßt sich durch Imprägnieren von Elektrographiten hoher Porosität mit flüssigem Silizium im Unterschuß ein Verbundwerkstoff gewinnen, der zu ungefähr gleichen Teilen aus ß-SiC und Graphit besteht und gute Gleiteigenschaften aufweist (Ulf Rosenblatt, S + E -Bericht Nr. 30 und Sprechsaal, Bd. 113, Heft 11/18, Seite 866 sowie DE-OS 28 38 333). Die Graphitphase brennt bereits bei Temperaturen über 600°C langsam aus.

Bei der Herstellung dieser Produkte ist das Ausgangsprodukt frei von Siliziumcarbid. Dieses wird vielmehr ausschließlich durch Umsetzung von Silizium mit überschüssigem Kohlenstoff gebildet.

Es bestand daher die Aufgabe, die Gleiteigenschaften, bzw. die Notlaufeigenschaften von Teilen aus infiltriertem Siliziumcarbid weiter zu verbessern, damit bei Ausbleiben des Schmiermittels kein Fressen an den Gleitflächen auftritt.

Die Erfindung beruht auf der Erkenntnis, daß sich in der Gleitfläche eines SiSiC-Körpers, der noch freie Kohlenstoff-Partikel enthält, bei hohen Temperaturen durch Reaktion mit Sauerstoff gezielt eine Porenstruktur erzeugen läßt. Die so erzeugten Poren verbessern die Versorgung der Gleitfläche mit Schmierstoff.

Es wurde nun ein Verfahren zur Herstellung eines Bauteils aus Silizium-infiltriertem Siliziumcarbid mit einer porösen Gleitfläche gefunden, das dadurch gekennzeichnet ist, daß man ein Bauteil aus Silizium-infiltriertem Siliziumcarbid mit
40 - 95 Gew.-% SiC,
1 - 45 Gew.-% Kohlenstoff-Partikeln der Korngröße 0,1-500 μm
und
1 - 25 Gew.-% Silizium
an Teilen der Oberfläche spanabhebend bearbeitet und so eine Gleitfläche erzeugt und man das erhaltene Bauteil in einer Sauerstoff enthaltenden Atmosphäre bei Temperaturen von 700 bis 1410°C solange erhitzt bis die in der Gleitfläche vorhandenen Kohlenstoff-Partikel mindestens teilweise unter Porenbildung oxidiert sind.

Bei der Glühbehandlung des erfindungsgemäß eingesetzten Bauteils in sauerstoffhaltiger Atmosphäre verbrennt der oberflächlich freigelegte Kohlenstoff. Er hinterläßt dabei Poren, deren Anzahl in der Gleitfläche durch die Menge und deren Durchmesser durch die Korngröße der C-Partikel im verwendeten C/SiSiC-Körper bestimmt ist. Die Reaktionstemperatur ist nach oben durch den Schmelzpunkt von Silizium begrenzt. Bei einem Schmelzen der Silizium-Phase würde die Maßhaltigkeit des behandelten Bauteils leiden und es können im Inneren des Bauteils unerwünschte poröse Bereiche entstehen. Bei Reaktionstemperaturen unter 700°C verläuft die Reaktion der freigelegten Kohlenstoff-Partikel mit Sauerstoff unwirtschaftlich langsam. Erhöhung der Temperatur und des Sauerstoffgehaltes der Gasphase verkürzt die Behandlungszeit. Am lebhaftesten wirkt reiner Sauerstoff ein. Jedoch können auch Gase mit nur geringem $O_2$-Gehalt, z.B. Luft, eingesetzt werden. Schwermetallsalze scheinen die Oxidation zu beschleunigen. Für eine merkliche Porenbildung mit Luft von 700°C benötigt man etwa 2 Stunden, mit reinem Sauerstoff bei 1400°C etwa 1 Stunde. Bevorzugt ist eine Mindestreaktionszeit von 2 Stunden. Das Entfernen großer (und daher dicker) C-Teilchen dauert länger als die Entfernung kleinerer Teilchen. Kohlenstoff-Partikel im Inneren des Bauteils werden durch die Behandlung mit Sauerstoff nicht angegriffen.

Es ist überraschend, daß die Oberfläche des Bauteils durch die Behandlung mit Sauerstoff nicht zerstört wird und insbesondere, daß durch das Ausbrennen des Graphits die Gleiteigenschaften der Glühfläche nicht nachteilig beeinflußt werden.

Man kann die Glühbehandlung bereits abbrechen, wenn die nach der Silizierung noch vorhandenen Kohlenstoff-Partikel erst teilweise oxidiert wurden. Es ist jedoch bevorzugt, die
Behandlung mit Sauerstoff solange fortzusetzen, bis der an der Gleitfläche vorhandene Kohlenstoff vollständig oxidiert ist.

Eine Möglichkeit, ein Bauteil aus Silizium-infiltriertem Siliziumcarbid und eingelagerten Kohlenstoff-Partikeln herzustellen, besteht darin, daß man eine Mischung aus 30 bis 87 Gew.-% Siliziumcarbid-Pulver mit einer Kornverteilung zwischen 1 und 100 μm,

0 bis 10 Gew.-% Kohlenstoff mit einer Kornverteilung zwischen 0,5 und 10 μm,

5 bis 50 Gew.-% Kohlenstoff mit einer Korngröße zwischen 60 und 560 μm und

5 bis 15 Gew.-% eines organischen Bindemittels zu einem Rohling verformt, das organische Bindemittel in nicht oxidierender Atmosphäre verkokt und anschließend den Rohling zwischen 1420 und 1700°C siliziert, wobei ein Bauteil aus Silizium-infiltriertem Siliziumcarbid anfällt. Ein ähnliches Verfahren zur Herstellung von Körpern aus SiSiC mit Kohlenstoff-Einschlüssen wird in der DE-OS 34 31 828 angegeben. Es ist bevorzugt, wenn das organische Bindemittel einen hohen Verkokungsrückstand aufweist. Bevorzugt sind aromatische Harze mit einem Verkokungsrückstand von mindestens 30 % Kohlenstoff. Die eingesetzten Harze können z.B. Novolake oder Phenolformaldehyd-Kondensationsprodukte (Verkokungsrückstand ca. 50 % C) sein, die für die Herstellung von Preßgranulat in einer organischen Flüssigkeit, wie Methanol, Isopropanol und Aceton, gelöst werden können. Diese Lösung wird dann mit den Feststoffkomponenten intensiv gemischt und anschließend getrocknet. Durch Sieben mit einer Maschenweite unter 0,6 mm kann so ein preßfähiges Granulat erzeugt werden. Polyphenylen besitzt einen Verkokungs-Rückstand von ca. 90 Gew.-% C.

Ein ähnliches Verfahren, das allerdings zu Körpern ohne Kohlenstoff-Einschlüsse führt, ist aus der DE-PS 31 16 786 bekannt. Beim vorliegenden Verfahren kann die Dichte des verkokten Körpers niedrigere Werte und der Anteil an Kohlenstoff im verkokten Körper höhere Werte annehmen.

Je kleiner die Kohlenstoffteilchen (mit einer Korngröße unter 10 μm) sind umso schlechter lassen sie sich verdichten. Somit erreicht man in der Regel bei gleichem Preßdruck bei Verwendung von sehr feinem Kohlenstoff nur eine geringe Gründichte. Dies ist nachteilig, weil zur Erzielung gleicher Enddichten der Kohlenstoffanteil erhöht werden muß.

Die feinen C-Teilchen und der verkokte Binder werden bei der Silizierung vollständig in SiC überführt. Dagegen werden die groben Kohlenstoff-Partikel (mit einer Mindestgröße von 50 μm) nur unvollständig in Siliziumcarbid umgewandelt, da sich eine Siliziumcarbidhaut bildet, die das weitere Eindringen des Siliziums erschwert. Eine vollständige Umwandlung in SiC erfolgt daher auch in Gegenwart von flüssigem Silizium nur langsam. Je größer die eingesetzten C-Partikel sind, umso kleiner ist der Gewichtsanteil, bezogen auf den Kohlenstoffgehalt, der in SiC umgewandelt wird und umso größer werden später die Poren an der Oberfläche. Bei gleichem eingesetzten Gewichtsanteil der Kohlenstoffpartikel wird bei größeren Partikeln der Flächen- bzw. Volumenanteil der Poren in der Oberfläche größer. Je enger das Kornverteilungs-Spektrums der eingesetzten groben Kohlenstoff-Partikel ist, umso einheitlicher ist die Größen-Verteilung der in der Gleitfläche erzeugbaren Poren. Bei kurzer Dauer der Silizierung nimmt der Durchmesser eines Kohlenstoff-Teilchens bei der Silizierung um ca. 50 μm ab. Da die Kohlenstoff-Partikel im Formteil nur die Reste größerer Partikel darstellen, kann der Gewichtsanteil von sehr kleinen Partikeln (unter 2 μm) im Körper vernachläßigt werden. Für die Erzeugung von Poren, die sich auf die Gleiteigenschaften positiv auswirken sind im Bauteil Kohlenstoff-Partikel von 50 - 500 μm bevorzugt.

Die Bearbeitung der Formteile erfolgt vorzugsweise erst nach dem Verkoken, weil die spanabhebenden Werkzeuge dabei nicht verschmiert werden und die Festigkeit der Formteile besser ist. Für das Erzeugen der Gleitfläche nach der Silizierung und vor der Sauerstoffbehandlung ist eine zweite (Fein-) Bearbeitung erforderlich, z.B. durch Schleifen, Läppen oder Polieren mit Diamantwerkzeugen. Der verkokte Körper besteht zu 30 bis 90 Gew.-% aus Siliziumcarbid und 10 bis 70 Gew.-% aus Kohlenstoff.

Die Formgebung kann bei einfachen Körpern durch Trockenpressen und bei komplizierten Teilen durch spanabhebende Bearbeitung eines isostatisch gepreßten oder trockengepreßten Rohlings erfolgen. Das Verkoken, d.h. die Umwandlung des kohlenstoffhaltigen Binders in Kohlenstoff, geschieht unter Luftabschluß, z.B. in Argon- oder Stickstoffatmosphäre durch Erhitzen mit einer Aufheizgeschwindigkeit von ca. 30 bis 70°C/Stunde bis auf 600 - 1200°C (abhängig vom Bindemittel) und einer Haltezeit von mehreren Stunden.

Das Silizieren erfolgt vorzugsweise im Vakuum. Dabei reagieren der aus dem Bindemittel freigesetzte Kohlenstoff, die Kohlenstoff-Partikel unter 40 μm vollständig sowie die Oberfläche der gröberen C-Partikel unter Bildung von Siliziumcarbid. Die verbleibenden Hohlräume werden mit flüssigem Silizium gefüllt. Beim Abkühlen unter die Schmelztemperatur des Siliziums bildet sich ein dichtes porenfreies Gefüge aus Siliziumcarbid, Silizium und Restkohlenstoff (in Form isolierter Partikel).

Mit dem erfindungsgemäßen Verfahren lassen sich Bauteile aus Silizium-infiltriertem Siliziumcarbid herstellen, die aus 40 - 95 Gew.-% Siliziumcarbid, 1 - 45 Gew.-% Kohlenstoff-Partikeln einer Korngröße

zwischen 0,1 und 500 μm und

1 - 25 Gew.-% Silizium
bestehen und eine poröse Gleitfläche aufweisen.

Bei vollständiger Reaktion mit Sauerstoff ist die Gleitfläche auch frei von Kohlenstoff-Partikeln. An Schliffbildern läßt sich neben dem eingesetzten Primär-Siliziumcarbid auch neu gebildetes SiC erkennen.

Der Volumenanteil an Poren im porösen Oberflächenbereich und insbesondere der Flächenanteil entspricht bei völliger Oxidation dem Volumenanteil an Kohlenstoff-Partikeln im Inneren des Bauteils. Je nach der Korngröße der eingesetzten groben Kohlenstoff-Partikel besitzt die Gleitfläche Poren mit Durchmessern von bis 500 μm. Die maximale Tiefe der Poren entspricht dem maximalen Durchmesser.

Die Kohlenstoff-Partikel lassen sich auch durch Reaktion mit Kohlendioxid nach der Gleichung
$$C + CO_2 \rightarrow 2CO$$
entfernen. Diese Reaktion verläuft jedoch erheblich langsamer als die Oxidation mit Sauerstoff.

Die Erfindung wird durch die folgenden Beispiele näher erläutert.

**Beispiele**

1. Eine Pulvermischung bestehend aus 84 % SiC einer Korngröße von 1 - 100 μm, 5 % Kohlenstoff einer Korngröße von 0,5- 10 μm, 5 % Graphit einer Korngröße von 1 - 100 μm und 6 % eines aromatischen Harzes wird durch Trockenpressen verdichtet. Dabei wird der Preßdruck so gewählt, daß sich nach dem Verkoken eine Dichte des Bauteils von 2,12 g/cm³ ergibt. Nach der Bearbeitung auf Endform wird das Bauteil unter Vakuum einem Silicierungsbrand unterzogen, nach welchem das Bauteil eine Dichte von 3,06 g/cm³ besitzt. Nach der Endbearbeitung, einschließlich Schleifen, zeigen sich in der Gleitfläche beim Silicierungsprozeß nicht durchreagierte Graphitpartikel mit einem Durchmesser von 0, 1 - 80 μm. Anschließend wird das Bauteil in einer sauerstoffreichen Atmosphäre 5 Stunden bei einer Temperatur von 1200° C geglüht, wobei die angeschliffenen, beim Silicierungsbrand nicht durchreagierten Graphitpartikel aus der Oberfläche herausbrennen. Auf diese Weise läßt sich in der Oberfläche eine Porenstruktur mit einem Porendurchmesser und einer Porentiefe von 0,1 - 80 μm erzeugen. Der dadurch entstandene Porenanteil liegt bei 3 %.

2. Eine Pulvermischung bestehend aus 74 % SiC einer Korngröße von 1 - 100 μm, 5 % Kohlenstoff einer Korngröße von 0,5 -10 μm, 15 % Graphit einer Korngröße von 1 - 250 μm und 6 % eines aromatischen Harzes wird analog Beispiel 1 so verarbeitet, daß sich nach dem Silicieren ein Bauteil mit einer Dichte von 2,95 g/cm³ ergibt.

Nach der Endbearbeitung und Glühung des Bauteils in einer sauerstoffreichen Atmosphäre bei 1200° C für die Dauer von 10 Stunden ergibt sich in der Oberfläche eine Porenstruktur mit einem Porendurchmesser von 0,1 - 200 μm und einer Porentiefe von 0,1 - 200 μm. Der dadurch entstandene Porenanteil liegt bei ca. 12 %.

3. Eine Pulvermischung bestehend aus 60 % SiC einer Korngröße von 1 - 100 μm, 5 % Kohlenstoff einer Korngröße von 0,5 - 10 μm, 30 % Graphit einer Korngröße von 1 - 500 μm und 6 % eines aromatischen Harzes wird analog Beispiel 1 so verarbeitet, daß sich nach dem Silicieren ein Bauteil mit einer Dichte von 2,80 g/cm³ ergibt. Nach Endbearbeitung und Glühung des Bauteils in einer sauerstoffreichen Atmosphäre bei 1200° C für die Dauer von 15 Stunden ergibt sich in der Oberfläche eine Porenstruktur mit einem Porendurchmesser und einer Porentiefe von 0, 1 - 450 μm. Der dadurch entstandene Porenanteil liegt bei ca. 28 %.

**Ansprüche**

1. Verfahren zur Herstellung eines Bauteils aus Silizium-infiltriertem Siliziumcarbid mit einer porösen Gleitfläche, dadurch gekennzeichnet, daß man ein Bauteil aus Silizium-infiltriertem Siliziumcarbid mit
40 - 95 Gew.-% SiC,
1 - 45 Gew.-% Kohlenstoff-Partikeln der Korngröße 0,1 bis 500 μm und
1 - 25 Gew.-% Silizium
an Teilen der Oberfläche spanabhebend bearbeitet und so eine Gleitfläche erzeugt und das erhaltene Bauteil in einer Sauerstoff enthaltenden Atmosphäre bei Temperaturen von 700 bis 1410° C solange erhitzt, bis die in der Gleitfläche vorhandenen Kohlenstoff-Partikel mindestens teilweise unter Porenbildung oxidiert sind.

2. Verfahren nach Anspruch 1, dadurch gekennzeichnet, daß man die Glühbehandlung so lange fortsetzt, bis die in der Gleitfläche vorhandenen Kohlenstoff-Partikel vollständig oxidiert sind.

3. Verfahren gemäß Anspruch 1, dadurch gekennzeichnet, daß man eine Mischung aus
30 - 87 Gew.-% Siliziumcarbid-Pulver mit einer Kornverteilung zwischen 1 und 100 μm,
0 - 10 Gew.-% Kohlenstoff mit einer Kornverteilung zwischen 0,5 und 10 μm,
5 - 50 Gew.-% Kohlenstoff mit einer Korngröße zwischen 60 und 560 μm und
5 - 15 Gew.-% eines organischen Bindemittels zu einem Rohling verformt, das Bindemittel in einer nicht-oxidierenden Atmosphäre verkokt, den Rohling zwischen 1420 und 1700° C siliziert, wobei ein Bauteil aus Silizium-infiltriertem Siliziumcarbid mit Kohlenstoff-Partikeln der Korngröße 0,1 bis 500 $\mu$m anfällt,
man im Bauteil eine Gleitfläche erzeugt und dann das Bauteil in einer Sauerstoff enthaltenden Atmosphäre glüht.

4. Verfahren nach Anspruch 3, dadurch gekennzeichnet, daß das Bindemittel einen Verkokungsrückstand von 30 bis 70 Gew.-% Kohlenstoff aufweist.

5. Bauteil aus Silizium-infiltriertem Siliziumcarbid mit einer porösen Gleitfläche, dadurch gekennzeichnet, daß es aus
40 - 95 Gew.-% Siliziumcarbid,
1 - 45 Gew.-% Kohlenstoff-Partikeln einer Korngröße
zwischen 0,1 und 500 $\mu$m und
1 - 25 Gew.-% Silizium
besteht, wobei mindestens 80 % des vorhandenen Siliziumcarbids als Primär-Siliziumcarbid mit Korngrößen von 1 bis 100 $\mu$m vorliegen.

6. Bauteil gemäß Anspruch 5, dadurch gekennzeichnet, daß die Gleitfläche frei von Kohlenstoff-Partikeln ist.

7. Bauteil gemäß Anspruch 6, dadurch gekennzeichnet, daß der Flächenanteil an Poren in der porösen Gleitfläche dem Volumenanteil an Kohlenstoff-Partikeln im Inneren des Bauteils entspricht.

8. Bauteil gemäß Anspruch 5 oder 6, dadurch gekennzeichnet, daß die Gleitfläche Poren im Durchmesser von bis zu 500 $\mu$m und einer Tiefe von bis zu 500 $\mu$m aufweist.